(19) Europäisches Patentamt
European Patent Office
Office européen des brevets

(11) Veröffentlichungsnummer : **0 424 442 B1**

(12) **EUROPÄISCHE PATENTSCHRIFT**

(45) Veröffentlichungstag der Patentschrift :
23.06.93 Patentblatt 93/25

(51) Int. Cl.$^5$ : **H01F 7/22, H01F 5/08, H02H 7/00**

(21) Anmeldenummer : 89908151.7

(22) Anmeldetag : 13.07.89

(86) Internationale Anmeldenummer :
PCT/DE89/00463

(87) Internationale Veröffentlichungsnummer :
WO 90/00803 25.01.90 Gazette 90/03

(54) WICKLUNGSANORDNUNG FÜR EINEN KRYOMAGNETEN.

(30) Priorität : 15.07.88 DE 3824042

(43) Veröffentlichungstag der Anmeldung :
02.05.91 Patentblatt 91/18

(45) Bekanntmachung des Hinweises auf die
Patenterteilung :
23.06.93 Patentblatt 93/25

(84) Benannte Vertragsstaaten :
CH DE FR GB LI NL

(56) Entgegenhaltungen :
GB-A- 1 463 292
CRYOGENIC ENGINEERING, the proceedings
of the First Cryogenic Engineering Conference
held in Tokyo and Kyoto, Japan on 9-13 April
1967, Heywood Temple Industrial Publications
LTD, pages 112-114, "Large superconducting
magnets for M.H.D." (Z.J.J. Stekly)
IEEE TRANSACTIONS ON NUCLEAR SCIEN-
CE, vol. NS-16, no. 3, June 1969, New York, US,
pages 720-722; W.B. Sampson et al.:
"Superconducting Synchroton Magnets"

(56) Entgegenhaltungen :
The Proceedings of the Seventh Symposium
on Engineering Problems of Fusion Research
Hyatt Regency Knoxville, Tennessee USA, October 25-28, 1977, IEEE Pub. No. 77CH1267-
4-NPS, pages 1310-1314, "Fast Ramp Superconductor for Ohmic Heating Coils", (M.S.
Walker and B.A. Zeitlin
NUCLEAR TECHNOLOGY FUSION, vol. 3, no.
2, September 1983, La Grange Park, Illi, pages
1346-1351, W. Chen and E.T. Cheng: "A mini-
mum-thickness low-activation toroidal field
coil concept fortokamak reactors"

(73) Patentinhaber : Bruker Analytische
Messtechnik GmbH
Silberstreifen
W-7512 Rheinstetten 4 (DE)

(72) Erfinder : WESTPHAL, Michael
Trifelsstrasse 22
W-6745 Offenbach (DE)
Erfinder : MÜLLER, Dr. Wolfgang Hans-Georg
Kösliner Strasse 48 a
W-7500 Karlsruhe 1 (DE)
Erfinder : KASTEN, Prof. Dr. Arne
Bertha-von-Suttner-Strasse 5
W-7500 Karlsruhe 1 (DE)

(74) Vertreter : KOHLER SCHMID + PARTNER
Patentanwälte
Ruppmannstrasse 27
W-7000 Stuttgart 80 (DE)

**Beschreibung**

Die Erfindung betrifft eine Wicklungsanordnung für einen Kryomagneten, mit mindestens einem Wicklungsabschnitt, der aus einer Parallelschaltung einer Wicklung aus bei Betriebstemperatur supraleitendem Draht und einer Wicklung aus normalleitendem Draht besteht.

Eine solche Wicklungsanordnung ist aus der DE-A 35 32 396 bekannt. Diese bekannte Wicklungsanordnung weist mehrere Wicklungsabschnitte auf, die jeweils aus einer Parallelschaltung einer Wicklung aus bei Betriebstemperatur supraleitendem Draht und einer Wicklung aus normalleitendem Draht bestehen. Die einzelnen Wicklungen bilden jeweils eine Lage der Wicklungsanordnung, und es sind jeweils zwei im Abstand voneinander angeordnete Lagen zu einem Wicklungsabschnitt parallel geschaltet. Die die normalleitenden Wicklungen bildenden Lagen bestehen aus Kupferdraht und haben nicht nur den Zweck, eine gute Quenchausbreitung zu gewährleisten, sondern wirken auch als Bandagen, welche eine unzulässige Dehnung der Windungen des supraleitenden Drahtes infolge der in dem supraleitenden Draht auftretenden Zugspannungen verhindern.

Die Größe der bekannten Wicklungsanordnung mit dem beschriebenen Aufbau ist durch zwei Faktoren bestimmt, nämlich durch den Grenzwert für das Produkt aus Stromdichte und Magnetfeldstärke und den zur Stromübernahme im Quenchfall erforderlichen Querschnitt des normalleitenden Materials. Die sich aus diesen Faktoren ergebende Größe der Wicklungsanordnung für Kryomagneten fällt besonders dann ins Gewicht, wenn es sich um Kryomagneten mit großem Innendurchmesser handelt, wie sie bei der Kernspintomographie Anwendung finden. Wicklungsanordnungen für supraleitende Tomographie-Magnete erreichen ein Gewicht, das in der Größenordnung von einigen Tonnen liegt, so daß die Materialkosten einen bedeutenden Faktor der Kosten der Wicklungsanordnung darstellen. Außerdem sind die Probleme der Halterung solcher Wicklungsanordnungen in einem Kryostaten umso größer, je höher das Gewicht der Wicklungsanordnung ist. Daher würden Maßnahmen, die eine Reduzierung des Gewichtes solcher Wicklungsanordnungen gestatten, viele beim Bau von Kryomagneten bestehende Probleme vermindern und gleichzeitig zu einer Kosteneinsparung führen.

Aus der DE-A 26 02 735, der DE-A 33 29 390, aus der wissenschaftlichen Fachzeitschrift "IEEE Transactions on Magnetics", MAG-23 (1987), Seiten 914 bis 917 sowie aus dem Artikel "Large Superconducting Magnets for M. H. D." von Z. J. J. Stekly auf den Seiten 112 - 114 der Veröffentlichung "CRYOGENIC ENGINEERING, The Proceedings of the First Cryogenic Engineering Conference held in Tokyo and Kyoto, Japan on 9 - 13 April 1967" sind verschiedene konfektionierte Drähte oder Kabel für Supraleitung bekannt, mit denen Wicklungsanordnungen für Kryomagneten hergestellt werden können. Jeder dieser konfektionierten Drähte bzw. Kabel ist so dimensioniert, daß er sowohl den Anforderungen an Supraleitung und Normalleitung wie auch den Anforderungen an mechanische Stabilität genügt. Bei Herstellung einer gesamten Wicklungsanordnung für einen Kryomagneten muß jeder Teil des konfektionierten Drahtes oder Kabels den höchsten auftretenden mechanischen Anforderungen innerhalb der Gesamtwicklungsanordnung genügen, da eine ortsabhängige Variation innerhalb der Wicklungsstruktur bei Verwenden derartiger konfektionierter Drähte oder Kabel nicht möglich ist. Dies stellt gleichfalls eine erhebliche Einschränkung für das Design der Gesamtwicklungsanordnung dar. Ferner sind derartige konfektionierte Drähte zu teuer für die Herstellung von Wicklungsanordnungen mit hohem Innendurchmesser, wie sie für Tomographiemagneten benötigt werden.

Aus der Fachveröffentlichung "The review of scientific Instruments" 36, (1965), Seiten 825 bis 830 sind verschiedene Strukturen von Wicklungsanordnungenen für Kryomagneten bekannt. Eine der bekannten Wicklungsanordnungen hat zwischen jeweils zwei Wicklungslagen eine Folienschicht, die durch ein Metallnetz verstärkt sein kann. Eine derartige, gegebenenfalls metallnetzverstärkte Folie zwischen zwei gegenläufig gewickelten Lagen bewirkt eine stabile mechanische Festlegung der einzelnen Windungen der Lagen gegeneinander, so daß ein Springen von Windungen gegeneinander aufgrund der auftretenden Axialkräfte vermieden werden soll. Das Vermeiden des Springens von Windungen ist nötig, um ein hierdurch bedingtes Auftreten von Quenchauslösungen auszuschließen. Das Metallnetz innerhalb der Folie ist jedoch zwangsläufig ohne Dehnung in Umfangsrichtung zwischen die Windungslagen eingebracht und dient somit nicht einer radialen mechanischen Abstützung von darunterliegenden Windungsdrähten.

Gegenüber diesem Stand der Technik liegt der vorliegenden Erfindung die Aufgabe zugrunde, eine Wicklungsanordnung der eingangs genannten Art so weiterzubilden, daß sie kostengünstig mit erheblich reduzierten Volumen herstellbar ist.

Diese Aufgabe wird nach der Erfindung durch eine Wicklungsanordnung für einen Kryomagneten nach dem Oberbegriff des Patentanspruchs 1 mit der im kennzeichnenden Teil des Patentanspruchs 1 angegebenen Struktur gelöst.

Die erfindungsgemäße Wicklungsanordnung ermöglicht die Verwendung eines supraleitenden Drahtes mit einem sehr niedrigen Verhältnis von Kupferquerschnitt zum Querschnitt der supraleitenden Filamente desselben bezogen auf dieses Verhältnis bei supraleitenden Drähten nach dem Stand der Technik, da der supraleitende Draht nur nach der Funktion der Stromtragfähigkeit dimensioniert werden muß. Die Windungen des normalleitenden Drahtes aus Kupfer oder einem .Material mit einer Leitfähigkeit von besser als $5,8 \times 10^7$ Sm$^{-1}$ müssen lediglich die Funktionen der thermischen Leitfähigkeit und der Stromübernahme im normalleitenden Fall bzw. bei Auftreten eines Quench innerhalb des supraleitenden Drahtes erfüllen, ohne die im Stand der Technik von diesen Windungen gleichfalls geforderte Aufgabe der Erzeugung einer hinreichenden mechanischen Abstützung der supraleitenden Drähte übernehmen zu müssen. Die mechanische Stützfunktion wird im wesentlichen von den Windungen aus Stahldraht oder einem Material mit einem Elastizitätsmodul, der höher als derjenige von Kupfer bei Betriebstemperatur der Wicklungsanordnung ist, übernommen. Durch diese .Aufteilung der Funktionen auf die drei verschiedenen Drähte der erfindungsgemäßen Wicklungsanordnung kann jeder Einzeldraht für seine Funktion optimiert werden, wodurch es möglich ist, die Gesamtzahl der Windungen bzw. die Gesamtzahl der Windungslagen innerhalb der erfindungsgemäßen Wicklungsanordnung zu reduzieren, eine erhebliche Volumeneinsparung herbeizuführen und das Gewicht der erfindungsgemäßen Wicklungsanordnung gegenüber demjenigen der gattungsbildenden Wicklungsanordnung herabzusetzen.

Wie erwähnt, wird der bei den bekannten Wicklungsanordnungen vorhandene Kupferquerschnitt nicht vollständig dazu benötigt, um den im Falle eines Quenches auftretenden Strom zu übernehmen, weil durch einen speziellen Aufbau der Wicklungsanordnung dafür Sorge getragen werden kann, daß im Falle eines Quenches eine schnelle gleichmäßige Verteilung des Stromes auf die aus normalleitendem Draht bestehende Wicklung stattfindet, ohne daß es zu örtlichen Stromspitzen kommt, die einen sehr großen Kupferquerschnitt erfordern würden, um örtliche Überhitzung und dadurch bedingte Zerstörungen zu verhindern. Soweit der normalleitende Draht dazu benötigt wird, die Wicklungsanordnung mechanisch zu verstärken, kann er auch durch ein anderes Material ersetzt werden, das einen höheren Elastizitätsmodul (E-Modul) aufweist und von dem daher eine geringere Menge benötigt wird als von dem bisher zu diesem Zweck verwendeten Kupferdraht. Dabei wird ein merklicher Effekt bereits erzielt, wenn der E-Modul des verwendeten Materials wenigstens das 1,2-fache des E-Moduls von Kupfer beträgt.

Neben einer mechanischen Verstärkung ergibt sich aus der Verwendung eines solchen Materials auch die Möglichkeit, den Grenzwert für das Produkt aus der Stärke des die Spule durchfließenden Stromes und der Magnetfeldstärke höher anzusetzen als bisher. Damit können die Windungen aus supraleitendem Draht dichter beieinander angeordnet werden, und es kann auch gegebenenfalls die Stärke des in der Magnetspule fließenden Stromes erhöht werden, so daß das Volumen der Wicklungsanordnung vermindert werden kann. Auf diese Weise lassen sich erhebliche Materialeinsparungen erzielen und die Probleme bei der Herstellung einer stabilen Wicklungsanordnung und bei deren Aufhängung in einem Kryostaten vermindern.

Die erfindungsgemäße Wicklungsanordnung muß keineswegs in Axialrichtung und Radialrichtung homogen ausgeführt sein, sondern kann bezüglich der Querschnittsdichte der drei Einzeldrähte über den Ort variieren. Durch Variation der einzelnen Windungszahlen pro Querschnittsfläche für die einzelnen Drahtsorten kann in radialer und axialer Richtung die mittlere Stromdichte variiert werden, was dem Konstrukteur eine größere Freiheit für das Spulendesign bei der Erfüllung der Anforderung des homogenen Feldes gibt. Daher ist es ausreichend, wenn die erfindungsgemäße Wicklungsanordnung lediglich innerhalb eines axialen und radialen Wicklungsabschnittes die im Anspruch 1 definierte Struktur hat.

Bevorzugte Weiterbildungen der erfindungsgemäßen Wicklungsanordnung sind Gegenstand der Unteransprüche 2 bis 8.

Bei der Verwendung eines ferromagnetischen Stahles für die Stahldrahtwindungen, wie dies in Anspruch 8 gefordert wird, führt ein Laden der Spule zu einer Sättigungsmagnetisierunç der ferromagnetischen Drahtwindungen, die zur Gesamtmagnetfeldstärke in vorbestimmbarer Weise beiträgt. Dieses Zusatzmagnetfeld ermöglicht die Erzielung eines homogenen Feldes auch bei verkürzten Spulen gegenüber der erforderlichen Spulenlänge bei Verwendung eines nicht-ferromagnetischen Stahles. Insgesamt ergibt sich hierdurch auch eine niedrigere Zugbelastung, die auf die einzelnen Drähte im Betriebszustand einwirkt.

Ein Ausführungsbeispiel nach dem Stand der Technik und .Ausführungsbeispiele gemäß der vorliegenden Erfindung werden nachfolgend unter Bezugnahme auf die beiliegenden Zeichnungen näher erläutert. Es zeigen:

Fig. 1      einen Längsschnitt durch eine Wicklungsanordnung eines Kryomagneten;

Fig. 2      einen Wicklungsabschnitt im Bereich des Ausschnittes II gemäß Fig. 1 in vergrößertem Maßstab mit nach dem Stand der Technik angeordneten Wicklungslagen;

Fig. 3      eine erste Ausführungsform einer erfindungsgemäßen Wicklungsanordnung in einer der Fig. 2 entsprechenden Darstellung;

Fig. 4 bis 8      Zweite bis sechste Ausführungsformen der erfindungsgemäßen Wicklungsanordnung in einer einem Abschnitt der Fig. 2 entsprechenden Darstellung.

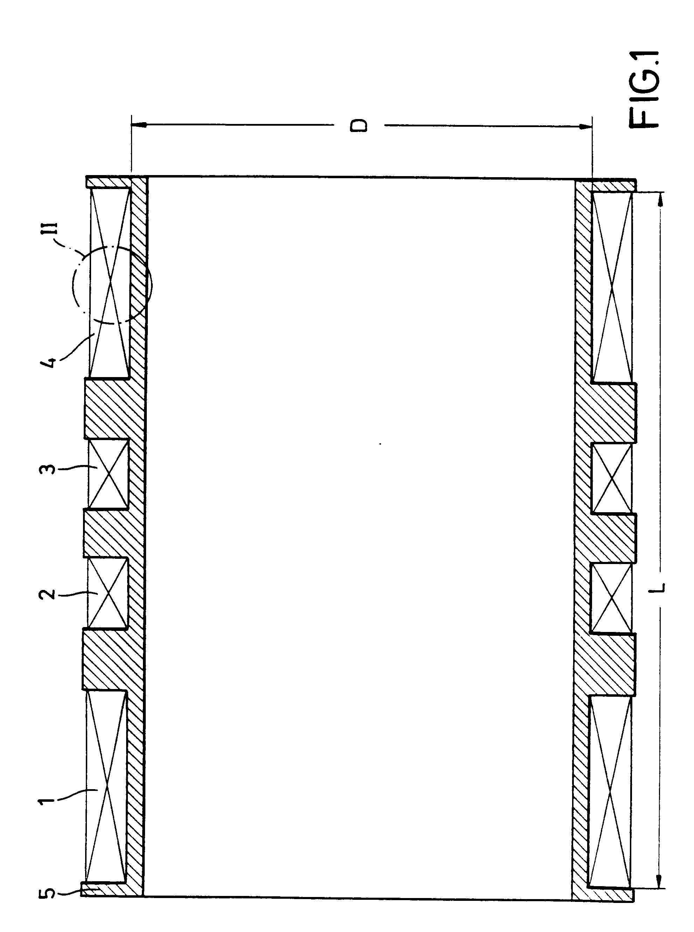

Fig. 1 gibt den typischen Aufbau einer Wicklungsanordnung für die Kryomagnete von Tomographiesystemen wieder. Bei dieser Wicklungsanordnung ist die Wicklung auf vier Kammern 1, 2, 3, 4 verteilt, die sich am Umfang eines Spulenkörpers 5 befinden. Die von den in den Kammern 1 bis 4 angeordneten Wicklungen gebildete Spule hat eine Gesamtlänge von 1 = 1700 mm und einen Innendurchmesser von D = 1080 mm. Das Magnetfeld im Inneren des Zentrums der Wicklungsanordnung hat eine Stärke von 3,65 Tesla, wogegen die innerhalb der Wicklung auftretende, maximale Feldstärke in Achsrichtung der Spule einen Wert Bmax von 4,74 Tesla aufweist.

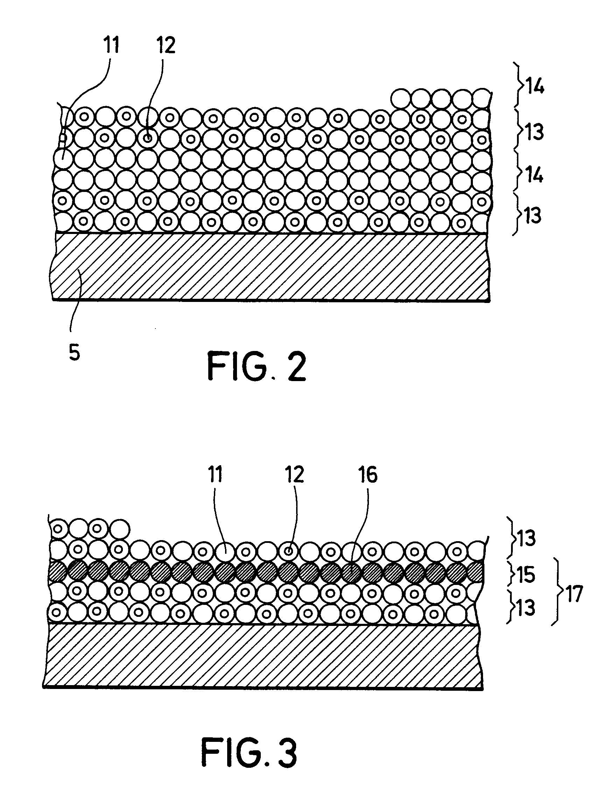

Nach dem Stand der Technik kann die Wicklungsanordnung einer solchen Spule den in Fig. 2 dargestellten Aufbau haben. Die auf dem Spulenkern 5 in den einzelnen Kammern angeordneten Wicklungen bestehen jeweils aus sechzig Lagen aus normalleitendem Kupferdraht 11 und aus bei Betriebstemperatur supraleitendem Draht 12. Die verwendeten Drähte haben einen Blankdrahtdurchmesser von je 1,5 mm und in lackiertem Zustand einen Durchmesser von 1,6 mm. Wie aus Fig. 2 ersichtlich, liegen in der Wicklungsanordnung der Kupferdraht und der supraleitende Draht im Verhältnis 3:1 vor, und zwar in Form von jeweils zwei Lagen 13 aus bifilar gewickeltem Kupferdraht und aus supraleitendem Draht im Wechsel mit je zwei Lagen 14 aus Kupferdraht. Das Querschnittsverhältnis von Kupfer zu Supraleiter im supraleitendem Draht beträgt 1,8.

Die derart aufgebaute Wicklungsanordnung hat ein Gewicht von 2,8 t, wovon 0,7 t auf den supraleitenden Draht und 2,1 t auf den Kupferdraht fallen. Der Betriebsstrom IN beträgt 557 A, während bei dem erwähnten Maximalfeld innerhalb der Wicklung von 4,74 Tesla der kritische Strom IC 1300 A beträgt. Daraus ergibt sich eine relative Strombelastung IN/IC = 0,43.

Bei diesen Werten ergibt sich in dem supraleitenden Draht infolge von Lorentzkräften eine maximale freie Zugspannung von

$$\sigma = IN * Bmax * r/q = 800 \text{ MPa}.$$

In dieser Beziehung sind r der Radius der Wicklung am Ort des maximalen Magnetfeldes und q die Querschnittsfläche des supraleitenden Drahtes. Infolge der Bandagenwirkung des Kupferdrahtes sowohl innerhalb der bifilaren Lagen 13 als auch der aus reinem Kupferdraht bestehenden Lagen 14, d.h. durch die Abstützung von inneren belasteten Lagen an äußeren, unbelasteten Lagen, ergibt sich im supraleitendem Draht die reduzierte Zugspannung

$$\sigma = \frac{1}{2}\sigma max * \frac{1}{v+1} = 100 \text{ MPa}.$$

Hierbei bezeichnet v die Anzahl der normalleitenden Windungen pro supraleitende Windung.

Eine nach der Erfindung ausgebildete Wicklungsanordnung kann sich aus der nach dem Stand der Technik ausgebildeten, in Fig. 2 dargestellten Wicklungsanordnung dadurch ergeben, daß man die beiden aus Kupferdraht bestehenden Lagen 14 durch eine einfache Lage 15 aus Stahldraht mit 1,6 mm Durchmesser ersetzt. Da der E-Modul von Stahl etwa doppelt so groß ist wie der E-Modul von Kupfer, hat die einfache Lage 15 aus Stahldraht die gleiche Bandagenwirkung wie die bei der Wicklungsanordnung nach Fig. 2 vorhandene Doppellage 14 aus Kupferdraht. Daher reduziert sich die Anzahl der Lagen der Wicklungsanordnung von sechzig auf fünfundvierzig, nämlich auf fünfzehn Doppellagen 13 aus bifilar verlegtem Kupferdraht 11 und supraleitendem Draht 12 im Wechsel mit je einer Lage 15 aus Stahldraht 16. Die sich in radialer Richtung wiederholenden Sequenzen der Doppellagen 13 und der einfachen Lage 15 bilden Lagengruppen 17. Aufgrund der Reduktion der Anzahl der Lagen der Wicklungsanordnung gegenüber dem Stand der Technik reduziert sich das Gewicht der Wicklung auf 2,1 t, von denen wiederum 0,7 t auf das Gewicht des supraleitenden Drahtes, aber nur 0,7 t auf das Gewicht des Kupferdrahtes und ebenfalls 0,7 t auf das Gewicht des Stahldrahtes entfallen. Es wird also hier gegenüber eine Wicklung mit herkömmlichen Aufbau eine Einsparung von 25 % sowohl bezüglich des Volumens als auch des Gewichtes erzielt. Daraus ergeben sich erhebliche Einsparungen an Materialkosten und es werden auch die Probleme der Halterung der Wicklungsanordnung im Kryostaten des Magneten vermindert. Infolge des reduzierten Gewichtes können die Trageelemente, mit denen die Wicklungsanordnung im Kryostaten befestigt ist, mechanisch schwächer, d.h. mit geringerem Querschnitt ausgelegt werden. Auf diese Weise wird wiederum der Wärmeübergang vom Inneren des Kryostaten nach außen vermindert, so daß hierdurch und durch die infolge des verminderten Durchmessers verminderte Oberfläche des Kryostaten eine Reduktion des Heliumverbrauchs erzielbar ist.

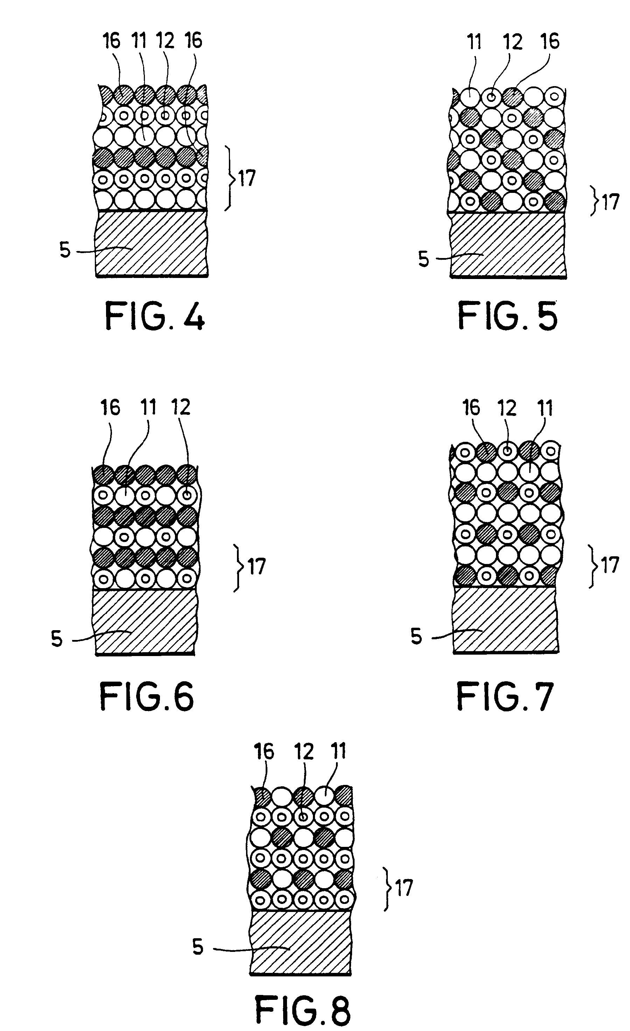

Bei der in Fig. 4 gezeigten abgewandelten Ausführungsform umfaßt eine Lagengruppe 17 eine innerste Lage aus normalleitendem Draht 11, eine diese Lage umschließende Lage aus supraleitendem Draht 12 und eine Lage aus Stahldraht 16, die die Lagengruppe 17 ummantelt.

Bei der in Fig. 5 gezeigten dritten Ausführungsform liegen in jeder Lage ein Stahldraht 16, ein supraleitender Draht 12 und ein normalleitender Draht 11. In diesem Fall reduziert sich die Lagengruppe 17 auf eine Einzellage. Zweckmäßigerweise sind die Windungen des supraleitenden, normalleitenden und Stahl-Drahtes der nächsten Lagen axial gegenüber den darunterliegenden Lagen geringfügig versetzt.

Gleichfalls ist es möglich, gemäß der dritten Ausführungsform nach Fig. 6 eine Lagengruppe 17 aus einer inneren Lage, die bifilar gewickelt den supraleitenden Draht 12 und den normalleitenden Draht 11 umfaßt, und aus einer jeweils äußeren Lage aus Stahldraht 16 zusammenzusetzen.

Bei der fünften Ausführungsform der erfindungsgemäßen Wicklungsanordnung umfaßt eine Lagengruppe 17 eine bifilar gewickelte Innenlage aus Stahldraht und supraleitendem Draht, die von einer weiteren Lage aus normalleitenden Draht umschlossen ist.

Bei der sechsten Ausführungsform gemäß Fig. 8 umfaßt eine Lagengruppe eine Innenlage aus supraleitendem Draht 12, die von einer bifilar gewickelten Außenlage aus Stahldraht 16 und normalleitendem Draht 11 umschlossen ist.

Jegliche beliebige Anordnung der Windungen des supraleitenden Drahtes 12, des normalleitenden Drahtes 11 und des Stahldrahtes 16 innerhalb einer Lagengruppe führt gleichfalls zu dem erfindungsgemäß beabsichtigten Vermindern des Volumens und des Gewichtes der gesamten Wicklungsanordnung, da die einzelnen Drähte 11, 12, 16 jeweils für ihre Funktionen der supraleitenden Stromtragfähigkeit, der normalleitenden Stromtragfähigkeit und Wärmeleitfähigkeit sowie der mechanischen Festigkeit optimiert werden können.

In Abweichung zu den gezeigten Ausführungsformen kann eine Lagengruppe auch aus mehr als zwei oder drei Einzellagen bestehen.

Die Anzahl der Windungen des normalleitenden Drahtes 11, des supraleitenden Drahtes 12 und des Stahldrahtes 16 pro Längsschnittfläche der Wicklungsanordnung kann ortsabhängig variierend in axialer Richtung wie auch in radialer Richtung ausgestaltet werden. Hierdurch ist es insbesondere möglich, die mittlere Stromdichte innerhalb der Wicklungsanordnung ortsabhängig zu verändern. Dies führt zu einer größeren Freiheit bei der Auslegung des Wicklungsdesigns in Anbetracht der Grundforderung des homogenen Magnetfeldes.

Der normalleitende Draht 11 kann, wie dies an sich üblich ist, aus Kupfer bestehen. Ebenso kann für die Zwecke der vorliegenden Erfindung ein anderes Material mit einer Leitfähigkeit verwendet werden, die besser als $5,8 \times 10^7 Sm^{-1}$ ist.

Anstelle des Stahldrahtes 16 kann bei sämtlichen Ausführungsformen ein Draht aus einem Material mit einem Elastizitätsmodul verwendet werden, der höher ist als derjenige von Kupfer bei der Betriebstemperatur der Wicklungsanordnung, die bei wenigen Kelvin liegt.

Statt Edelstahl als Material für die Stahldrähte 16 kann ferromagnetischer Stahl verwendet werden. Bei den hohen Betriebsfeldstärken erfährt der ferromagnetische Stahl eine magnetische Sättigung und liefert somit selbst einen der Höhe nach vorbestimmbaren Beitrag zum Gesamtmagnetfeld. Dies ermöglicht eine Verkürzung der Gesamtspule bei homogenem Magnetfeld und zu einer Reduktion der Zugbelastung auf die Einzeldrähte 11, 12, 16.

Es versteht sich, daß die Erfindung nicht auf das dargestellte Ausführungsbeispiel beschränkt ist, sondern Abweichungen davon möglich sind, ohne den Rahmen der Erfindung zu verlassen. Es können die im Betriebszustand supraleitenden Wicklungen, die normalleitenden Wicklungen und die Stützeinlagen auf vielfältige unterschiedliche Weise angeordnet werden, solange die Bedingung erfüllt ist, daß bei der gewählten Anordnung das Produkt aus Stromdichte und Magnetfeldstärke einen sich aus dem Spulenaufbau ergebenden Grenzwert nicht überschreitet, der Querschnitt an normalleitendem Material ausreichend groß ist, um beim Hochfahren des Magneten sowie im Fall eines Quenches den Betriebsstrom zu tragen, und endlich die Anordnung der von dem normalleitenden Draht gebildeten Wicklung eine schnelle Quenchausbreitung gewährleistet, wogegen die aus einem .Material mit hohem Elastizitätsmodul bestehenden Einlagen so angeordnet sind, daß sie die Windungen aus supraleitendem Draht optimal abstützen, ohne daß es auf ihre elektrische Leitfähigkeit ankommt.

Da der normalleitende Draht keine erhebliche Stützfunktion mehr aufweist, kann er auch aus einem Material bestehen, das zwar eine gute elektrische Leitfähigkeit, aber kein besonders hohes Elastizitätsmodul aufweist, wie es beispielsweise bei Aluminium der Fall ist. Der Einsatz von Aluminium würde eine weitere bedeutende Reduzierung des Gewichtes einer solchen Wicklungsanordnung zur Folge haben, da das spezifische Gewicht von Aluminium bedeutend geringer ist als dasjenige von Kupfer und wegen der besseren Leitfähigkeit sogar ein kleinerer Querschnitt des Aluminiumdrahtes gewählt werden könnte. Weiterhin versteht es sich, daß es sich bei den aus einem Material mit hohem Elastizitätsmodul bestehenden Einlagen nicht nur um Stahldraht zu handeln braucht, sondern daß auch Filamente aus anderen Stoffen mit hohem Elastizitätsmodul, insbesondere aus faserverstärkten Kunststoffen, Anwendung finden könnten. Endlich wäre es möglich, die gesamte Wicklungsanordnung zusätzlich mit einem Mantel aus einem Material mit hohem Elastizitätsmodul zu umgeben.

## Patentansprüche

1.  Wicklungsanordnung für einen Kryomagneten, mit mindestens einem Wicklungsabschnitt, der aus einer Parallelschaltung einer Wicklung eines bei Betriebstemperatur supraleitenden Drahtes (12) und einer Wicklung aus normalleitendem Draht (11) besteht, dadurch gekennzeichnet, daß

die Wicklungsanordnung innerhalb des mindestens einen Wicklungsabschnittes mehrere, sich in radialer Richtung bezüglich der Wicklungsanordnung wiederholende Lagengruppen (17) aufweist, von denen jede
- Windungen des supraleitenden Drahtes (12),
- Windungen des normalleitenden Drahtes (11) aus Kupfer oder einem Material mit einer Leitfähigkeit größer als 5,8 x $10^7 Sm^{-1}$ und
- Windungen aus Stahldraht (16) oder einem Draht aus einem Material mit einem Elastizitätsmodul, der höher ist als derjenige von Kupfer bei der Betriebstemperatur der Wicklungsanordnung, aufweist.

2. Wicklungsanordnung nach Anspruch 1, dadurch gekennzeichnet, daß der supraleitende Draht (12) ein monolithischer Draht ist.

3. Wicklungsanordnung nach Anspruch 1 oder 2, dadurch gekennzeichnet, daß jede Lagengruppe
- eine Lage von Windungen des supraleitenden Drahtes (12),
- eine Lage von Windungen des normalleitenden Drahtes (11), und
- eine Lage von Windungen des Stahldrahtes (16) oder des Drahtes aus einem Material mit einem Elastizitätsmodul, der höher ist als derjenige von Kupfer bei der Betriebstemperatur der Wicklungsanordnung, aufweist.

4. Wicklungsanordnung nach Anspruch 1 oder 2, dadurch gekennzeichnet, daß jede Lagengruppe (17) wenigstens eine erste Lage, die zwei der nachfolgend genannten Windungsarten umfaßt, und eine zweite Lage, die die dritte der nachfolgend genannten Windungsarten umfaßt, aufweist, nämlich
- Windungen eines supraleitenden Drahtes (12),
- Windungen eines normalleitenden Drahtes (11) aus Kupfer oder einem Material mit einer Leitfähigkeit größer als 5,8 x $10^7 Sm^{-1}$, und
- Windungen aus Stahldraht oder einem Draht aus einem Material mit einem Elastizitätsmodul, der höher ist, als derjenige von Kupfer bei der Betriebstemperatur der Wicklungsanordnung.

5. Wicklungsanordnung nach Anspruch 4, dadurch gekennzeichnet, daß jede Lagengruppe (17) eine Mehrzahl von ersten Lagen (13) und eine zweite Lage (15) aufweist.

6. Wicklungsanordnung nach Anspruch 4, dadurch gekennzeichnet, daß jede Lagengruppe eine erste Lage (13) und eine Mehrzahl von zweiten Lagen (15) umfaßt.

7. Wicklungsanordnung nach einem der Ansprüche 1 bis 6, dadurch gekennzeichnet, daß die jeweiligen Windungszahlen der ersten, zweiten und dritten Windungsart in der Längsschnittfläche der Wicklungsanordnung in axialer und/oder radialer Richtung der Wicklungsanordnung variieren.

8. Wicklungsanordnung nach einem der Ansprüche 1 bis 7, dadurch gekennzeichnet, daß die Stahldrahtwindungen aus einem ferromagnetischen Draht bestehen.

## Claims

1. Winding arrangement for a cryomagnet with at least one winding section composed of a parallel connection of a winding of wire (12) which is superconducting at the operating temperature and a winding from normally conducting wire (11) characterized in that, the winding arrangement within the winding section comprises several layer groups (17), said groups repeating themselves in their radial direction, with each of which comprising
- windings of superconducting wire (12),,
- windings of normally conducting wire (11) from copper or from a material with a conductivity greater than 5.8 x $10^7 Sm^{-1}$ and
- windings from steel wire (16) or from a wire made of a material with a modulus of elasticity which is higher than that of copper at the operating temperature of the winding arrangement.

2. Winding arrangement according to claim 1 characterized in that, the superconducting wire (12) is a monolithic wire.

3. Winding arrangement according to claim 1 or 2 characterized in that, each layer group comprises
- one layer of windings from the superconducting wire (12),

- one layer of windings from the normally conducting wire (11), and
- one layer of windings from the steel wire (16) or from the wire made from a material with a modulus of elasticity which is higher than that of copper at the operating temperature of the winding arrangement.

4. Winding arrangement according to claim 1 or 2 characterized in that, each layer group (17) comprises at least one first layer which includes two of the winding types mentioned below, and a second layer which includes the third winding type mentioned below, namely,
- windings of superconducting wire (12),
- windings of normally conducting wire (11) from copper or from a material with a conductivity greater than $5.8 \times 10^7$ Sm$^{-1}$, and
- windings from steel wire or from a wire made from a material with a modulus of elasticity which is higher than that of copper at the operating temperature of the winding arrangement.

5. Winding arrangement according to claim 4 characterized in that each layer group (17) comprises a plurality of first layers (13) and a second layer (15).

6. Winding arrangement according to claim 4 characterized in that, each layer group includes a first layer (13) and a plurality of second layers (15).

7. Winding arrangement according to one of the claims 1 through 6 characterized in that, the respective number of windings of the first, second, and third winding type in a lengthwise cross section through the winding arrangement vary in the axial and/or radial direction of the winding arrangement.

8. Winding arrangement according to one of the claims 1 through 7 characterized in that, the steel wire windings are made from a ferromagnetic wire.


**Revendications**

1. Agencement d'enroulement pour un cryoaimant, avec au moins une partie d'enroulement constituée d'un montage en parallèle d'un enroulement de fil (12) supraconducteur à la température de service et d'un enroulement de fil normalement conducteur (11), **caractérisé** en ce que l'agencement d'enroulement présente, à l'intérieur de ladite partie d'enroulement, plusieurs groupes de couches (17) qui se répètent en direction radiale par rapport à l'agencement d'enroulement et qui présentent chacun
- des spires du fil supraconducteur (12)
- des spires du fil normalement conducteur (11), réalisé en cuivre ou en un matériau présentant une conductivité supérieure à $5,8 \times 10^7$ Sm$^{-1}$, et
- des spires de fil d'acier (16), ou d'un fil réalisé en un matériau présentant un module d'élasticité supérieur à celui du cuivre à la température de service de l'agencement d'enroulement.

2. Agencement d'enroulement selon la revendication 1, **caractérisé** en ce que le fil supraconducteur (12) est un fil monolithique.

3. Agencement d'enroulement selon la revendication 1 ou 2, **caractérisé** en ce que chaque groupe de couches présente
- une couche de spires du fil supraconducteur (12)
- une couche de spires du fil normalement conducteur (11), et
- une couche de spires du fil d'acier (16), ou du fil réalisé en un matériau présentant un module d'élasticité supérieur à celui du cuivre à la température de service de l'agencement d'enroulement.

4. Agencement d'enroulement selon la revendication 1 ou 2, **caractérisé** en ce que chaque groupe de couches (17) présente au moins une première couche comprenant deux des types de spires indiqués ci-après, et une seconde couche comprenant le troisième des types de spires indiqués ci-après, à savoir
- des spires d'un fil supraconducteur (12),
- des spires d'un fil normalement conducteur (11), réalisé en cuivre ou en un matériau présentant une conductivité supérieure à $5,8 \times 10^7$ Sm$^{-1}$, et
- des spires de fil d'acier, ou d'un fil réalisé en un matériau présentant un module d'élasticité supérieur à celui du cuivre à la température de service de l'agencement d'enroulement.

5. Agencement d'enroulement selon la revendication 4, **caractérisé** en ce que chaque groupe de couches (17) présente une pluralité de premières couches (13), et une seconde couche (15).

6. Agencement d'enroulement selon la revendication 4, **caractérisé** en ce que chaque groupe de couches présente une première couche (13) et une pluralité de secondes couches (15).

7. Agencement d'enroulement selon l'une quelconque des revendications 1 à 6, **caractérisé** en ce que les nombres respectifs de spires des premier, deuxième et troisième types de spires, dans la section longitudinale de l'agencement d'enroulement, varient dans la direction axiale et/ou radiale de l'agencement d'enroulement.

8. Agencement d'enroulement selon l'une quelconque des revendications 1 à 7, **caractérisé** en ce que les spires en fil d'acier sont réalisées en fil ferromagnétique.

FIG.1

EP 0 424 442 B1

11 12

14
13
14
13

5

# FIG. 2

11 12 16

13
15
13

17

# FIG. 3

FIG. 4

FIG. 5

FIG.6

FIG.7

FIG.8